# EUROPÄISCHE PATENTSCHRIFT

(11) **EP 2 468 557 B1**
(45) Veröffentlichungstag und Bekanntmachung des Hinweises auf die Patenterteilung: **17.06.2015**
(21) Anmeldenummer: 11009757.3
(22) Anmeldetag: 10.12.2011
(51) Int. Cl.: B60K 15/035

(54) **Kraftstoffsystem**
Fuel system
Système de carburant

(30) Priorität: 21.12.2010 DE 102010055309
(43) Veröffentlichungstag der Anmeldung: 27.06.2012
(73) Patentinhaber: AUDI AG, 85045 Ingolstadt (DE)
(72) Erfinder: Hagen, Harald, 95473 Creussen (DE)
(74) Vertreter: Lehle, Josef

(56) Entgegenhaltungen:
- EP-A1- 1 674 318
- WO-A1-2005/110797
- WO-A1-2007/065519
- US-A1- 2004 206 398

## Beschreibung

Die Erfindung betrifft ein Kraftstoffsystem, insbesondere eines Kraftfahrzeugs, mit einem Kraftstofftank und einer Entlüftungseinrichtung zur Entlüftung des Kraftstofftanks, wobei die Entlüftungseinrichtung über zumindest eine einen Zwischenspeicher für flüssigen Kraftstoff aufweisende Abscheidevorrichtung verfügt, und wobei die Abscheidevorrichtung eine Kraftstofffördereinrichtung zur Förderung von Kraftstoff aus dem Zwischenspeicher aufweist.

Kraftstoffsysteme der eingangs genannten Art sind aus dem Stand der Technik bekannt. Sie sind beispielsweise einem Kraftfahrzeug beziehungsweise einem Antriebssystem des Kraftfahrzeugs zugeordnet. Das Antriebssystem verfügt dabei insbesondere über zumindest eine Brennkraftmaschine und ist beispielsweise als Hybridantriebssystem ausgebildet, weist also die Brennkraftmaschine sowie zumindest eine elektrische Maschine auf, wobei die Brennkraftmaschine und die elektrische Maschine ein Antriebsmoment des Antriebssystems zumindest zeitweise gemeinsam erzeugen. Der Brennkraftmaschine wird von dem Kraftstoffsystem Kraftstoff aus dem Kraftstofftank zugeführt. Häufig wird als Kraftstoff ein flüchtiger Kohlenwasserstoffkraftstoff, beispielsweise Benzin, verwendet. Der Kraftstofftank enthält daher normalerweise sowohl ein Volumen an flüssigem Kraftstoff als auch ein Volumen an gasförmigem Kraftstoff, welches insbesondere oberhalb des flüssigen Kraftstoffs anfällt. Der Kraftstofftank kann ein geschlossener Tank, insbesondere ein Drucktank, oder ein teilgeschlossener, insbesondere auch druckloser, Tank sein. Der geschlossene Tank wird insbesondere zur Reduzierung von Emissionen verwendet.

Bedingt durch Schwankungen der Temperatur des Kraftstoffs, beispielsweise verursacht durch Veränderungen der Umgebungstemperatur, können Druckschwankungen in dem Kraftstofftank auftreten. Aus diesem Grund ist die Entlüftungseinrichtung dem Kraftstofftank zugeordnet. Sie dient der Entlüftung des Kraftstofftanks. Auf diese Weise kann ein zu hoher Druck in dem Kraftstofftank durch die Entlüftungseinrichtung reduziert werden. Zu diesem Zweck entlüftet die Entlüftungseinrichtung den Kraftstofftank durch eine Entlüftungsleitung. Bei dem Entlüften kann durch die Entlüftungseinrichtung beziehungsweise die Entlüftungsleitung sowohl gasförmiger als auch flüssiger Kraftstoff aus dem Kraftstofftank heraus gelangen. Der entlüftete Kraftstoff liegt also zunächst als Gemisch aus gasförmigem und flüssigem Kraftstoff vor. Dies ist insbesondere dann der Fall, wenn das Entlüften des Kraftstofftanks bei hohem Kraftstofftankinnendruck durchgeführt wird. Dabei liegen, bedingt durch den hohen Druck beziehungsweise die große Druckdifferenz zwischen Kraftstofftankinnendruck und dem Druck außerhalb des Kraftstofftanks hohe Strömungsgeschwindigkeiten des entlüfteten Kraftstoffs vor, wodurch flüssiger Kraftstoff von dem gasförmigen Kraftstoff mitgerissen wird.

Der gasförmige Kraftstoff darf ohne weiteres der Brennkraftmaschine beziehungsweise deren Ansaugsystem zugeführt werden, wobei zwischen dem Kraftstofftank und der Brennkraftmaschine ein der Entlüftungseinrichtung zugeordneter Kraftstoffspeicher, welcher bevorzugt als Aktivkohlespeicher ausgebildet ist, angeordnet sein kann. Der Kraftstoffspeicher dient dazu, gasförmigen Kraftstoff zwischenzuspeichern, also aufzunehmen, wenn nicht benötigter gasförmiger Kraftstoff vorliegt und abzugeben, sobald der gasförmige Kraftstoff in die Brennkraftmaschine abgeführt werden kann. Es darf jedoch kein flüssiger Kraftstoff in den Kraftstoffspeicher beziehungsweise die Brennkraftmaschine gelangen.

Aus diesem Grund weist die Entlüftungseinrichtung die zumindest eine Abscheidevorrichtung auf, welche zur Trennung von gasförmigem und flüssigem Kraftstoff dient. Die Abscheidevorrichtung ist demnach dazu vorgesehen, das Überführen von flüssigem Kraftstoff von dem Kraftstofftank durch die Entlüftungseinrichtung in die Brennkraftmaschine beziehungsweise den Kraftstoffspeicher zu verhindern. Dabei scheidet die Abscheidevorrichtung flüssigen Kraftstoff ab und lässt gasförmigen Kraftstoff passieren. Der abgeschiedene flüssige Kraftstoff gelangt in den Zwischenspeicher der Abscheidevorrichtung. Der Begriff Zwischenspeicher bedeutet dabei nicht, dass tatsächlich eine (Zwischen-) Speicherung des flüssigen Kraftstoffs vorgesehen ist. Vielmehr kann der flüssige Kraftstoff unmittelbar aus dem Zwischenspeicher beziehungsweise der Abscheidevorrichtung abgeführt werden, bevorzugt in Richtung des Kraftstofftanks. Dabei kann sich jedoch, beispielsweise durch eine Begrenzung des Abführvolumenstroms, insbesondere durch einen Leitungsquerschnitt oder dergleichen, ein Anstieg des Füllstands des Zwischenspeichers ergeben. Der abgeschiedene flüssige Kraftstoff kann demnach zumindest zeitweise nicht so schnell abgeführt werden, wie er in den Zwischenspeicher eingebracht wird. Selbstverständlich ist auch eine Zwischenspeicherung des flüssigen Kraftstoffs, beispielsweise über eine bestimmte Zeitspanne, realisierbar.

Beim Betreiben des Kraftstoffsystems sollte verhindert werden, dass die sich in dem Zwischenspeicher beziehungsweise der Abscheidevorrichtung befindliche Menge des flüssigen Kraftstoffs eine Grenzmenge überschreitet, der Füllstand des Zwischenspeichers demnach größer als ein Grenzfüllstand wird, weil dies die Wirksamkeit der Abscheidevorrichtung beeinträchtigen kann. Je größer die Menge flüssigen Kraftstoffs in dem Zwischenspeicher ist, umso größer wird das Risiko, dass zusammen mit dem gasförmigen Kraftstoff auch flüssiger Kraftstoff wieder aus der Abscheidevorrichtung heraus gelangt und in Richtung des Kraftstoffspeichers beziehungsweise der Brennkraftmaschine mitgenommen wird. Aus diesem Grund kann der Abscheidevorrichtung die Kraftstofffördereinrichtung zugeordnet werden. Diese wird dazu eingesetzt, flüssigen Kraftstoff aus dem Zwischenspeicher zu fördern, insbesondere in Richtung des Kraftstofftanks. Die Kraftstofffördereinrichtung ist dabei üblicherweise als Saugstrahlpumpe ausgebildet, wobei als Betriebsmittel der Saugstrahlpumpe häufig Kraftstoff verwendet wird, welcher von einer Kraftstoffpumpe des Kraftstoffsystems aus dem Kraftstofftank in Richtung der Brennkraftmaschine gefördert wird. Die Kraftstoffpumpe wird üblicherweise jedoch nur betrieben, solange die Brennkraftmaschine aktiv ist und mit Kraftstoff versorgt werden muss. Nach einem Deaktivieren der Brennkraftmaschine sind somit sowohl die Kraftstoffpumpe als auch die Saugstrahlpumpe funktionslos. Insofern kann der Kraftstoff nicht mehr aus dem Zwischenspeicher der Abscheidevorrichtung abgeführt werden, obwohl dies, beispielsweise aufgrund eines zu hohen Füllstands, durchaus gewünscht sein kann.

Aus dem Stand der Technik ist beispielsweise die US 2004/0206398 A1 bekannt. Diese zeigt eine Flüssigkeitsfalle, die ein Gehäuse umfasst, welches in einem Kraftstofftank eines Kraftfahrzeugs anordenbar ist, sowie zumindest einen Flüssigkeitseinlassanschluss, der an ein Entlüftungsventil anschließbar ist, einen Gasauslassanschluss, der an eine Kraftstoffdampfbehandlungseinrichtung angeschlossen ist, sowie eine Kraftstoffabführeinrichtung, mittels welcher flüssiger Kraftstoff in den Kraftstofftank abgeführt werden kann. Die Kraftstoffabführeinrichtung ist dazu ausgebildet, aufgrund einer Beschleunigung, aufgrund von Schwerkrafteinfluss sowie aufgrund von Kraftstoffbewegungen innerhalb des Kraftstofftanks betrieben zu werden. Weiter zeigt die EP 1 674 318 A1 ein Entlüftungsventil, die WO 2007/065519 A1 einen Kraftstoffbehälter für ein Kraftfahrzeug und die WO 2005/110797 A1 eine Kraftstoffversorgungseinrichtung für ein Kraftfahrzeug.

Es ist Aufgabe der Erfindung, ein Kraftstoffsystem vorzuschlagen, bei welchem ein zuverlässiges Abführen des Kraftstoffs, insbesondere bei deaktivierter Kraftstoffpumpe, aus dem Zwischenspeicher möglich ist.

Dies wird erfindungsgemäß erreicht, indem die Kraftstofffördereinrichtung in die Abscheidevorrichtung integriert ist. Darunter ist zu verstehen, dass die Kraftstofffördereinrichtung zumindest bereichsweise, insbesondere vollständig, in der Abscheidevorrichtung beziehungsweise einem Gehäuse der Abscheidevorrichtung vorliegt. Dabei ist die Kraftstofffördereinrichtung unabhängig von der Kraftstoffpumpe des Kraftstoffsystems, welche zur Förderung von Kraftstoff in Richtung der Brennkraftmaschine dient, betreibbar. Mit der integrierten Kraftstofffördereinrichtung kann demnach auch Kraftstoff aus dem Zwischenspeicher gefördert werden, wenn die Kraftstoffpumpe des Kraftstoffsystems deaktiviert ist, also keinen Kraftstoff aus dem Kraftstofftank fördert. Bevorzugt ist die Kraftstofffördereinrichtung dabei elektrisch betreibbar beziehungsweise antreibbar. Durch die Integration der Kraftstofffördereinrichtung in die Abscheidevorrichtung kann zudem eine reduzierte Baugröße erzielt werden.

Eine Weiterbildung der Erfindung sieht vor, dass die Kraftstofffördereinrichtung mindestens einen zumindest bereichsweise in dem Zwischenspeicher angeordneten Kolben, insbesondere einen Einzelkolben oder einen Doppelkolben, und/oder eine schwenkbar gelagerte Klappe aufweist. Mit dem Kolben beziehungsweise der Klappe ist dabei eine Förderwirkung der Kraftstofffördereinrichtung erzielbar. Der Kolben beziehungsweise die Klappe ist dazu innerhalb des Zwischenspeichers beweglich, wobei der Kolben für eine Linearbewegung und die Klappe für eine Schwenkbewegung ausgebildet beziehungsweise gelagert ist. Zur Erzielung der Förderwirkung teilen der Kolben beziehungsweise die Klappe den Zwischenspeicher zumindest in eine erste und eine zweite Kammer auf. Dabei ist in zumindest einer Stellung des Kolbens beziehungsweise der Klappe eine Unterbrechung einer Strömungsverbindung zwischen den Kammern vor. Es kann jedoch vorgesehen sein, das in zumindest einer weiteren Stellung des Kolbens beziehungsweise der Klappe die Strömungsverbindung zwischen den Kammern vorgesehen. Die Förderwirkung der Kraftstofffördereinrichtung ist durch die Bewegung von Kolben (Linearbewegung) beziehungsweise Klappe (Schwenkbewegung) erzielbar. Der Kolben kann sowohl als Einzelkolben als auch als Doppelkolben ausgebildet sein. Liegt er als Einzelkolben vor, so ist die Erzielung der Förderwirkung bei einer Bewegung des Kolbens nur in eine Richtung vorgesehen. Ist er dagegen als Doppelkolben ausgebildet, so liegt die Förderwirkung bevorzugt sowohl bei der Bewegung in die erste Richtung als auch bei einer Bewegung in eine zweite, der ersten Richtung entgegengesetzte Richtung vor.

Eine Weiterbildung der Erfindung sieht vor, dass der Kolben oder die Klappe den Zwischenspeicher zumindest in eine erste und eine zweite Kammer aufteilt, wobei Mittel vorgesehen sind, über welche in zumindest einer Stellung des Kolbens oder der Klappe die Kammern in Strömungsverbindung stehen. Die Mittel können dabei derart ausgelegt sein, dass die Strömungsverbindung lediglich vorliegt, wenn sich der Kolben oder die Klappe in der einen Stellung beziehungsweise in einem Stellungsbereich befindet. Alternativ können die Mittel jedoch auch derart ausgebildet sein, dass die Strömungsverbindung bevorzugt bei einer Bewegung des Kolbens beziehungsweise der Klappe vorliegt. Insbesondere liegt die Strömungsverbindung bei einer Bewegung des Kolbens beziehungsweise der Klappe in die erste Richtung vor, während sie bei einer Bewegung in die zweite Richtung unterbrochen ist.

Eine Weiterbildung der Erfindung sieht vor, dass die Mittel einen Überströmkanal und/oder ein, insbesondere den Kolben oder die Klappe durchgreifendes, Durchlassventil aufweisen. Der Überströmkanal liegt bevorzugt in einer Wandung des Zwischenspeichers vor. Beispielsweise ist er als randoffene Ausnehmung in diesem ausgebildet. Im Bereich des Überströmkanals weist der Zwischenspeicher insofern in radialer Richtung gesehen (entsprechend der Radialerstreckung des Kolbens) größere Abmessungen auf als in weiteren Bereichen des Zwischenspeichers. Insofern kann Kraftstoff, wenn sich der Kolben beziehungsweise die Klappe im Bereich des Überströmkanals befindet, durch den Überströmkanal an dem Kolben beziehungsweise der Klappe vorbei strömen. Wird der Kolben beziehungsweise die Klappe aus dem Bereich des Überströmkanals heraus bewegt, so wird die Strömungsverbindung jedoch unterbrochen. Alternativ oder zusätzlich können die Mittel auch das Durchlassventil aufweisen. Dies ist insbesondere federkraftbeaufschlagt, so dass es bei einer Bewegung des Kolbens beziehungsweise der Klappe in die erste Richtung öffnet und bei einer Bewegung in die der ersten Richtung entgegengesetzte zweite Richtung schließt beziehungsweise geschlossen bleibt. Besonders bevorzugt ist das Durchlassventil an dem Kolben beziehungsweise der Klappe vorgesehen und durchgreift den Kolben beziehungsweise die Klappe.

Eine Weiterbildung der Erfindung sieht vor, dass der Kraftstofffördereinrichtung eine Betätigungseinrichtung, insbesondere mindestens einen Elektromagnet aufweisend, zugeordnet ist. Die Betätigungseinrichtung dient dem Betreiben der Kraftstofffördereinrichtung zur Förderung von Kraftstoff aus dem Zwischenspeicher. Die Betätigungseinrichtung ist bevorzugt eine elektrische Betätigungseinrichtung, welche unabhängig von der Kraftstoffpumpe des Kraftstoffsystems betreibbar ist. Die Betätigungseinrichtung kann dabei über mindestens einen Elektromagnet verfügen. Insbesondere dient die Betätigungseinrichtung der Bewirkung einer Bewegung des Kolbens beziehungsweise der Klappe.

Eine Weiterbildung der Erfindung sieht mindestens ein der Abscheidevorrichtung strömungstechnisch vorgeschaltetes oder nachgeschaltetes Entlüftungsventil zur Entlüftung des Kraftstofftanks durch die Abscheidevorrichtung vor. Das Entlüftungsventil ist dabei der Entlüftungseinrichtung zugeordnet. Das Entlüftungsventil kann derart eingestellt werden, dass es zur Entlüftung des Kraftstofftanks öffnet oder zur Unterbrechung der Entlüftung schließt. Es liegt beispielsweise als FTIV (Fuel Tank Isolation Valve) vor. Das Entlüftungsventil kann als Taktventil ausgebildet sein, welches ein Einstellen von diskreten Schaltzuständen (geöffnet und geschlossen) erlaubt. Besonders bevorzugt ist das Entlüftungsventil als Stetigventil ausgelegt, welches nicht lediglich die diskreten Schaltzustände zulässt, sondern ein Einstellen des Durchströmungsquerschnitts in mehreren Stufen, besonders bevorzugt ein stetiges Einstellen, ermöglicht. Auf diese Weise ist der Volumenstrom durch die Abscheidevorrichtung, insbesondere stetig, gesteuert und/oder geregelt einstellbar. Das Entlüftungsventil ist der Abscheidevorrichtung strömungstechnisch vorgeschaltet oder nachgeschaltet, der Kraftstoff muss demnach für ein Durchströmen der Abscheidevorrichtung stets auch das Entlüftungsventil passieren. Das Entlüftungsventil kann mit der Abscheidevorrichtung oder der Kraftstofffördereinrichtung integriert sein. Das Entlüftungsventil kann also modular in die Kraftstofffördereinrichtung integriert vorliegen.

Eine Weiterbildung der Erfindung sieht vor, dass sowohl die Kraftstofffördereinrichtung als auch das Entlüftungsventil von der Betätigungseinrichtung betätigbar sind, insbesondere getrennt voneinander oder gemeinsam. Die Betätigungseinrichtung liegt insoweit als gemeinsame Betätigungseinrichtung vor, so dass mithin eine einzige Betätigungseinrichtung ausreicht, um sowohl die Kraftstofffördereinrichtung als auch das Entlüftungsventil zu betätigen. Wie vorstehend bereits beschrieben, kann es vorgesehen sein, dass das Entlüftungsventil mit der Kraftstofffördereinrichtung integriert ist, also als gemeinsames Bauteil vorliegen. In diesem Fall ist bevorzugt auch eine Integration der Betätigungseinrichtung mit dem Entlüftungsventil und der Kraftstofffördereinrichtung vorgesehen. Die Betätigung kann dabei getrennt voneinander oder gemeinsam vorgesehen sein. In ersterem Fall kann mittels der Betätigungseinrichtung entweder die Kraftstofffördereinrichtung oder das Entlüftungsventil getrennt von dem jeweils anderen Element angesteuert werden. In letzterem Fall erfolgt mittels der Betätigungseinrichtung eine gleichzeitige Betätigung sowohl der Kraftstofffördereinrichtung als auch des Entlüftungsventils. Mit der gemeinsamen Betätigungseinrichtung kann demnach sowohl die Kraftstofffördereinrichtung zur Förderung von Kraftstoff aus dem Zwischenspeicher betätigt werden, als auch das Entlüften des Kraftstoffranks mittels des Entlüftungsventils bewirkt werden. Besonders bevorzugt ist hierbei die Integration von Kraftstofffördereinrichtung, Entlüftungsventil und Betätigungseinrichtung, weil somit mit einem einzigen Bauteil, welches zumindest bereichsweise in der Abscheidevorrichtung vorliegt, sowohl das Entlüften des Kraftstofftanks als auch das Entleeren des Zwischenspeichers möglich sind.

Eine Weiterbildung der Erfindung sieht vor, dass die Betätigungseinrichtung zur Durchführung einer Betätigungsbewegung in eine erste Richtung und eine der ersten Richtung entgegengesetzte zweite Richtung und/oder um einen ersten Hub und um einen zweiten, größeren Hub ansteuerbar ist, wobei die Durchführung der Betätigungsbewegung in die erste Richtung oder um den ersten Hub die Kraftstofffördereinrichtung und/oder das Entlüftungsventil und die Durchführung der Betätigungsbewegung in die zweite Richtung oder um den zweiten Hub das Entlüftungsventil und/oder die Kraftstofffördereinrichtung betätigen. In einer ersten Ausführungsform ist die Betätigungseinrichtung demnach zur Durchführung der Betätigungsbewegung in zwei Richtungen und in einer zweiten Ausführungsform zur Durchführung der Betätigungsbewegung mit zwei unterschiedlichen Hüben vorgesehen. Dabei liegt eine Wirkverbindung zwischen der Betätigungseinrichtung und der Kraftstofffördereinrichtung sowie dem Entlüftungsventil derart vor, dass in Abhängigkeit von der Richtung oder dem Hub entweder die Kraftstofffördereinrichtung oder das Entlüftungsventil betätigt wird. Auf diese Weise kann die Betätigungseinrichtung als gemeinsame Betätigungseinrichtung sowohl für die Kraftstofffördereinrichtung als auch das Entlüftungsventil ausgebildet sein, jedoch ein getrenntes, also nicht gleichzeitiges, Betätigen von Kraftstofffördereinrichtung und Entlüftungsventil erlauben.

Eine Weiterbildung der Erfindung sieht vor, dass die Klappe für eine Betätigung durch Inertialbewegung ausgebildet ist. Unter Inertialbewegung ist dabei eine Bewegung der Kraftstofffördereinrichtung beziehungsweise des Kraftstoffsystems zu verstehen, welche beispielsweise durch eine Bewegung des Kraftfahrzeugs verursacht sind. Die Inertialbewegung schließt beispielsweise auch Vibrationen und dergleichen ein, welche insbesondere bei einem Betreiben der Brennkraftmaschine auftreten können. Die Klappe ist dabei bevorzugt derart ausgelegt, dass die Bewegung der Klappe in die erste oder die zweite Richtung bei Auftreten einer entsprechenden Inertialbewegung bewirkt wird. Beispielsweise ist die Schwenkachse der Klappe parallel zu einem Untergrund des Kraftfahrzeugs, jedoch senkrecht zu dessen Fahrtrichtung vorgesehen. Auf diese Weise kann die Betätigung der Klappe und damit das Bewirken einer Förderwirkung der Kraftstofffördereinrichtung aufgrund von Beschleunigungs- und Verzögerungsvorgängen des Kraftfahrzeugs bewirkt werden.

Eine Weiterbildung der Erfindung sieht vor, dass der Abscheidevorrichtung zumindest ein in Abhängigkeit des Kraftstofftankfüllstands schaltendes Belüftungsventil und/oder zumindest ein dem Kraftstofftank zugeordnetes Sicherheitsventil strömungstechnisch vorgeschaltet sind. Das Belüftungsventil ist insbesondere als FLVV (Fill Limit Venting Valve) ausgebildet. Ein solches ermöglicht ein Belüften des Kraftstofftanks, solange der Kraftstofftankfüllstand kleiner ist als ein bestimmter Kraftstofftankfüllstand, insbesondere Kraftstofftankmaximalfüllstand. Über das Belüftungsventil wird somit das Belüften des Kraftstofftanks, insbesondere bei einem Zuführen von Kraftstoff in den Kraftstofftank, sichergestellt. Zusätzlich oder alternativ kann das Sicherheitsventil vorgesehen sein, welches beispielsweise als Überroll-Sicherheitsventil beziehungsweise ROV (Roll Over Valve) ausgebildet ist. Sowohl das Belüftungsventil als auch das Sicherheitsventil sind üblicherweise dem Kraftstofftank zugeordnet und der Abscheidevorrichtung strömungstechnisch vorgeschaltet, so dass der Kraftstoff zunächst das Belüftungsventil beziehungsweise das Sicherheitsventil durchläuft, bevor es in die Abscheidevorrichtung gelangt.

Die Erfindung betrifft auch ein Antriebssystem mit einem Kraftstoffsystem gemäß den vorstehenden Ausführungen. Das Antriebssystem verfügt dabei insbesondere über zumindest eine Brennkraftmaschine und ist beispielsweise als Hybridantriebssystem ausgebildet.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Darstellung eines Kraftstoffsystems in einer ersten Ausführungsform,
- Figur 2: das Kraftstoffsystem in einer zweiten Ausführungsform,
- Figur 3: einen Bereich des Kraftstoffsystems in einer dritten Ausführungsform,
- Figur 4: das Kraftstoffsystem in einer vierten Ausführungsform,
- Figur 5: das Kraftstoffsystem in einer vierten Ausführungsform,
- Figur 6: einen Bereich des Kraftstoffsystems in einer sechsten Ausführungsform, und
- Figur 7: eine Betätigungseinrichtung des Kraftstoffsystems in einer ersten und einer zweiten Ausführungsform.

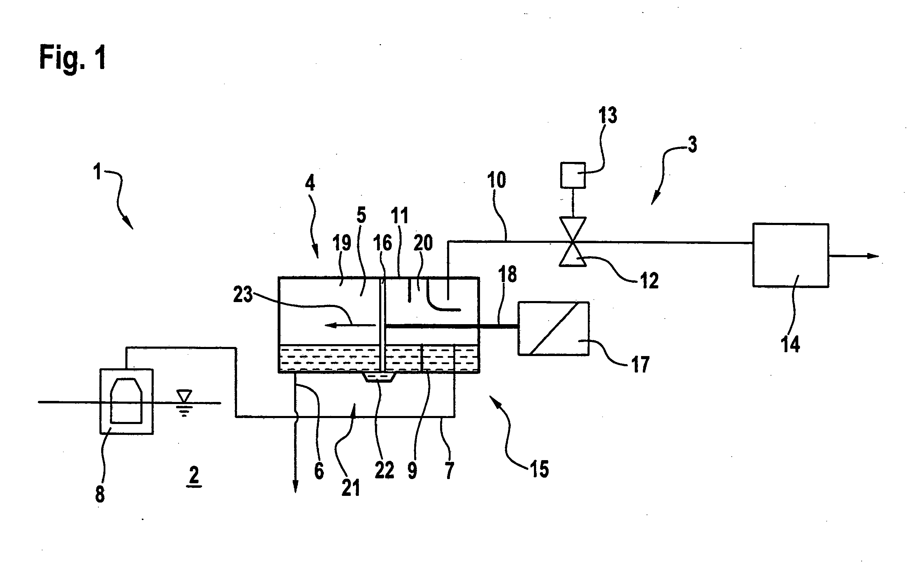

Die Figur 1 zeigt eine schematische Darstellung eines Kraftstoffsystems 1. Das Kraftstoffsystem 1 ist beispielsweise Bestandteil eines Kraftfahrzeugs beziehungsweise eines Antriebssystems des Kraftfahrzeugs. Das Kraftstoffsystem 1 verfügt über einen Kraftstofftank 2 und eine Entlüftungseinrichtung 3 zur Entlüftung des Kraftstofftanks 1. Die Entlüftungseinrichtung 3 weist eine Abscheidevorrichtung 4 mit einem Zwischenspeicher 5 auf. Die Abscheidevorrichtung 4 dient dazu, flüssigen Kraftstoff aus einem Gemisch von flüssigem und gasförmigem Kraftstoff abzuscheiden. Der abgeschiedene flüssige Kraftstoff liegt anschließend in dem Zwischenspeicher 5 vor und kann, beispielsweise durch eine Rückführungsleitung 6, wieder dem Kraftstofftank 2 zugeführt werden. Die Rückführungsleitung 6 weist bevorzugt ein Ventil, insbesondere Drainageventil beziehungsweise Rückschlagventil, auf. Anstelle der Rückführungsleitung 6 kann auch lediglich das Ventil vorgesehen sein, insbesondere wenn die Abscheidevorrichtung 4 zumindest bereichsweise in dem Kraftstofftank 2 vorliegt, so dass durch das Ventil aus dem Zwischenspeicher 5 austretender Kraftstoff unmittelbar in den Kraftstofftank gelangt. Das Ventil ist derart ausgebildet, dass Kraftstoff durch die Rückführungsleitung 6 lediglich aus dem Zwischenspeicher 5 herausgelangen, nicht jedoch in ihn hineingelangen kann. Somit wird verhindert, dass durch die Rückführungsleitung 6 Kraftstoff aus dem Kraftstofftank 2 in den Zwischenspeicher 5 gelangt.

Die Entlüftungseinrichtung 3 steht über eine Entlüftungsleitung 7 in Strömungsverbindung mit dem Kraftstofftank 2. Auf der dem Kraftstofftank 2 zugewandten Seite der Entlüftungsleitung 7 beziehungsweise in dem Kraftstofftank 2 ist dabei ein Belüftungsventil 8 vorgesehen, welches in Abhängigkeit des Kraftstofftankfüllstands schaltet. Üblicherweise ist das Belüftungsventil 8 derart ausgeführt, dass es nur bei einem Kraftstofftankfüllstand unterhalb eines bestimmten Kraftstofftankfüllstands, insbesondere eines Maximalkraftstofftankfüllstands, geöffnet ist, also Kraftstoff, insbesondere gasförmiger Kraftstoff, aus dem Kraftstofftank in die Entlüftungsleitung 7 gelangen kann. Die Entlüftungsleitung 7 mündet in den Zwischenspeicher 5 der Abscheidevorrichtung 4 ein, bevorzugt durch einen Boden 9 des Zwischenspeichers 5. Beabstandet von der Entlüftungsleitung 7 beziehungsweise deren Mündungsstelle in den Zwischenspeicher 5 mündet eine Auslassleitung 10 in den Zwischenspeicher 5 ein, bevorzugt durch eine Decke 11 des Zwischenspeichers 5. Die Mündungsstelle der Auslassleitung 10 in den Zwischenspeicher 5 ist damit bevorzugt derart angeordnet, dass lediglich gasförmiger Kraftstoff aus dem Zwischenspeicher 5 in die Auslassleitung 10 gelangen kann. Dazu sind die Mündungsstellen von Auslassleitung 10 und Entlüftungsleitung 7 bevorzugt an gegenüberliegenden Seiten des Zwischenspeichers 5 angeordnet. Die Auslassleitung 10 weist ein Entlüftungsventil 12 auf, welches mittels einer Betätigungseinrichtung 13 betätigbar ist. Das Entlüftungsventil 12 und die Betätigungseinrichtung 13 sind dabei bevorzugt derart ausgebildet, dass der Durchströmungsquerschnitt des Entlüftungsventils 12 stetig einstellbar ist. Auf der der Abscheidevorrichtung 4 abgewandten Seite mündet die Auslassleitung 10 in einen Kraftstoffspeicher 14, insbesondere einen Aktivkohlespeicher, ein. Der Kraftstoffspeicher 14 dient der Zwischenspeicherung von gasförmigem Kraftstoff.

Die Abscheidevorrichtung 4 ist üblicherweise zumindest bereichsweise, insbesondere vollständig, in dem Kraftstofftank 2, angeordnet. Auch eine Anordnung außerhalb des Kraftstofftanks 2 ist jedoch möglich. Alternativ kann die Abscheidevorrichtung 4 auch in eine Leitung, beispielsweise die Entlüftungsleitung 7, integriert sein. In einer bevorzugten Ausführungsform ist die Abscheidevorrichtung derart ausgebildet, dass sie beziehungsweise die Entlüftungseinrichtung 3 einen bestimmten Druckverlust aufweist. Dieser ist dabei derart gewählt, dass bei einem Entlüften der Kraftstofftanks 2 mittels der Entlüftungseinrichtung 3 ein eventuell vorhandenes Ventil, beispielsweise das Belüftungsventil 8, nicht in dessen Geschlossenstellung gebracht wird. Das Belüftungsventil 8 weist üblicherweise einen Schwimmer auf, welcher einen Ventilsitz des Belüftungsventils 8 freigibt, solange der Kraftstofftankfüllstand kleiner als ein bestimmter Kraftstofftankfüllstand ist. Wird der mittels der Entlüftungseinrichtung 3, also durch das Belüftungsventil 8, abgeführte Volumenstrom größer als ein Auslegungsvolumenstrom, so kann der Schwimmer von dem Volumenstrom beziehungsweise dem entlüfteten Kraftstoff in den Ventilsitz, also in die Geschlossenstellung verlagert werden, so dass ein weiteres Entlüften des Kraftstofftanks 2 nicht möglich ist. Dies gilt insbesondere bei vollständig geöffnetem Entlüftungsventil 12.

Üblicherweise wird der Druckverlust der Entlüftungseinrichtung 3 durch Anpassen des Entlüftungsventils 12 eingestellt, beispielsweise durch Einbringen eines Drosselelements. Hier soll es nun bevorzugt vorgesehen sein, dass der Druckverlust der Entlüftungseinrichtung 3 durch Anpassen der Abscheidevorrichtung 4 beziehungsweise deren Druckverlust erfolgt, beispielsweise durch Vorsehen eines angepassten Drosselelements. Das Entlüftungsventil 12 weist demnach bevorzugt kein Drosselelement auf. Das Drosselelement kann jedoch selbstverständlich zusätzlich vorgesehen sein.

Um Kraftstoff unabhängig von einem Betrieb der Brennkraftmaschine beziehungsweise einer Kraftstoffpumpe des Kraftstoffsystems, welche Kraftstoff aus dem Kraftstofftank in Richtung der Brennkraftmaschine fördert, betreiben zu können, weist die Abscheidevorrichtung 4 eine Kraftstofffördereinrichtung 15 auf, welche in die Abscheidevorrichtung 4 integriert ist. In der in der Figur 1 dargestellten Ausführungsform des Kraftstoffsystems 1 weist die Kraftstofffördereinrichtung 15 einen Kolben 16 auf, welcher in dem Zwischenspeicher 5 angeordnet und dort linearbeweglich gelagert ist. Die Linearbewegung des Kolbens 16 ist mittels einer Betätigungseinrichtung 17 bewirkbar. Der Kolben 16 steht dazu über eine Kuppelstange 18 in Wirkverbindung mit der Betätigungseinrichtung 17.

Der Kolben 16 teilt den Zwischenspeicher 5 in eine erste Kammer 19 und eine zweite Kammer 20 auf. Durch eine Bewegung des Kolbens 16 sind dabei die Volumina der Kammern 19 und 20 einstellbar. Das Kraftstoffsystem 1 weist Mittel 21 auf, über welche die Kammern 19 und 20 in zumindest einer Stellung des Kolbens 16 miteinander in Strömungsverbindung stehen. Die Mittel 21 liegen hier in Form eines Überströmkanals 22 vor. Der Überströmkanal 22 ist dabei eine randoffene Radialausnehmung - entsprechend einer Radialerstreckung des Kolbens 16 -, welche in einer Wandung des Zwischenspeichers 5 vorliegt. Ist der Kolben 16 im Bereich des Überströmkanals 22 angeordnet, so kann Kraftstoff zwischen den Kammern 19 und 20 hin und her strömen, so dass insoweit stets ein ausgeglichener Füllstand in den Kammern 19 und 20 vorliegt. Wird also durch die Entlüftungsleitung 7 Kraftstoff in die Abscheidevorrichtung 4 eingebracht und wird von dieser nachfolgend flüssiger Kraftstoff abgeschieden, so wird sich nicht nur der Füllstand in der zweiten Kammer 20, sondern entsprechend auch in der ersten Kammer 19 erhöhen.

Wird der Kolben 16 mittels der Betätigungseinrichtung in eine erste Richtung (Pfeil 23) bewegt, so bewirkt der Kolben 16, sobald er sich nicht mehr im Bereich des Überströmkanals 22 befindet, eine Förderwirkung der Kraftstofffördereinrichtung 15. Das bedeutet, dass durch die Bewegung des Kolbens 16 der Druck in der ersten Kammer 19 derart durch Volumenverkleinerung erhöht wird, dass Kraftstoff durch die Rückführungsleitung 6 in Richtung des Kraftstofftanks 2 gedrängt wird. Auf diese Weise kann durch die Rückführungsleitung 6 auch Kraftstoff aus dem Zwischenspeicher 5 in den Kraftstofftank 2 gefördert werden, wenn dies nicht durch andere Mittel, beispielsweise Schwerkrafteinfluss, realisierbar ist. Der Kolben 16 liegt hier als Einzelkolben vor. Es ist demnach beabsichtigt, dass die Förderwirkung lediglich bei einer Bewegung des Kolbens 16 in die erste Richtung vorliegt. Wird der Kolben 16 dagegen in eine zweite Richtung bewegt, welche der ersten Richtung entgegengesetzt ist, so liegt keine Förderwirkung der Kraftstofffördereinrichtung 15 vor.

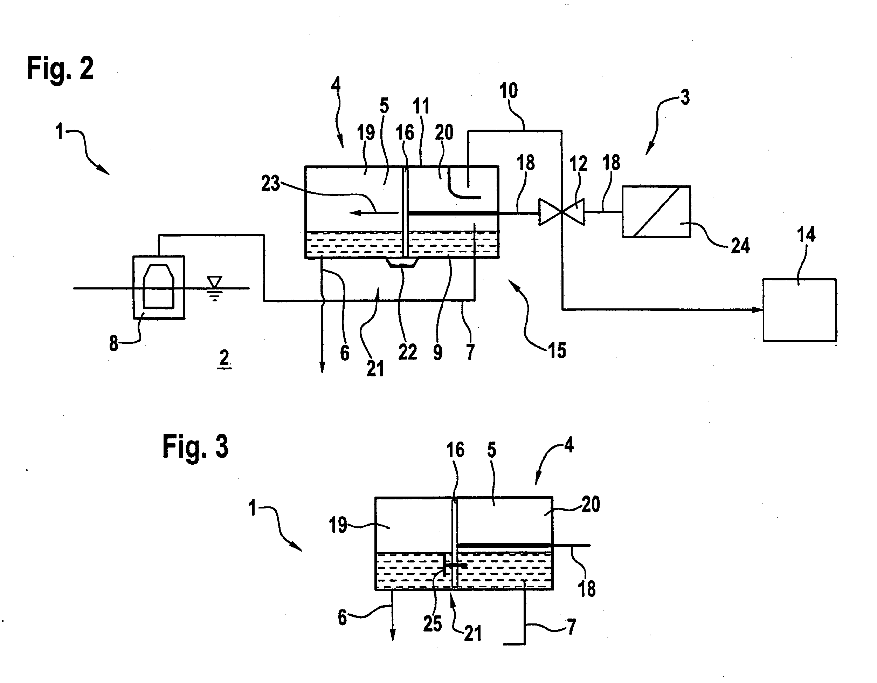

Die Figur 2 zeigt eine schematische Darstellung einer zweiten Ausführungsform des Kraftstoffsystems 1. Die einzelnen Elemente entsprechen im Wesentlichen denen des anhand der Figur 1 beschriebenen Kraftstoffsystems 1, so dass insoweit auf die vorstehenden Ausführungen verwiesen sei. Im Unterschied zu der anhand der Figur 1 beschriebenen Ausführungsform liegen die Betätigungseinrichtungen 13 und 17 hier als gemeinsame Betätigungseinrichtung 24 vor. Mittels der gemeinsamen Betätigungseinrichtung 24 sind sowohl das Entlüftungsventil 12 als auch die Kraftstofffördereinrichtung 15 betätigbar. Die Betätigung kann dabei getrennt voneinander oder gemeinsam erfolgen. Zu diesem Zweck kann die Betätigungseinrichtung 24 beispielsweise dazu ausgebildet sein, Betätigungsbewegungen in eine erste Richtung und in eine der ersten Richtung entgegengesetzte zweite Richtung durchzuführen. Alternativ kann die Betätigungseinrichtung 24 auch zur Durchführung der Betätigungsbewegungen um einen ersten Hub oder um einen zweiten, größeren Hub vorgesehen sein. Dabei soll die Durchführung der Betätigungsbewegung in die erste Richtung oder um den ersten Hub die Kraftstofffördereinrichtung 15 und die Durchführung der Betätigungsbewegung in die zweite Richtung oder um den zweiten Hub das Entlüftungsventil 12 betätigen oder umgekehrt.

Die Figur 3 zeigt einen Ausschnitt einer dritten Ausführungsform des Kraftstoffsystems 1. Bei dieser liegen die Mittel 21 nicht in Form des Überströmkanals 22, sondern als Durchlassventil 25 vor. Das Durchlassventil 25 ist dabei vorzugsweise derart ausgebildet, dass es bei einer Bewegung des Kolbens 16 in die erste Richtung schließt beziehungsweise geschlossen bleibt und bei einer Bewegung in die zweite Richtung öffnet beziehungsweise geöffnet bleibt, so dass die Strömungsverbindung zwischen den Kammern 19 und 20 vorliegt und Kraftstoff aus der zweiten Kammer 20 in die erste Kammer 19 strömen kann. Das Durchlassventil 25 ist beispielsweise federkraftbeaufschlagt, wobei die Federkraft auf ein Schließen des Durchlassventils 25 gerichtet ist. Es soll darauf hingewiesen werden, dass bei allen beschriebenen Ausführungsformen des Kraftstoffsystems 1 die Mittel 21 beliebig ausgestaltet sein können, also entweder als Überströmkanal 22 oder als Durchlassventil 25 vorliegen können. Die Mittel 21 können auch sowohl den Überströmkanal 22 als auch das Durchlassventil 25 aufweisen.

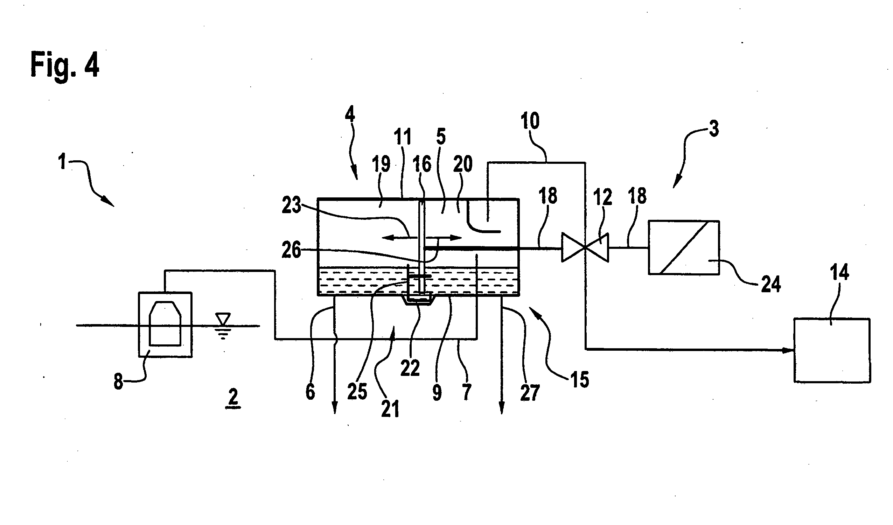

Die Figur 4 zeigt eine vierte Ausführungsform des Kraftstoffsystems 1. Die wesentlichen Elemente entsprechen wiederum denjenigen der anhand der Figuren 1 bis 3 beschriebenen Kraftstoffsysteme 1, so dass insoweit auf die vorstehenden Ausführungen verwiesen sei. Der hier dargestellte Kolben 16 ist als Doppelkolben ausgebildet. Es ist demnach eine Förderwirkung des Kolbens 16 sowohl in die erste Richtung (Pfeil 23) als auch in die zweite Richtung (Pfeil 26) vorgesehen. Entsprechend sind mehrere Rückführungsleitung 6 und 27 vorgesehen, wobei die Rückführungsleitung 6 wie bei den vorstehend beschriebenen Kraftstoffsystemen 1 der ersten Kammer 19 strömungstechnisch zugeordnet ist. Die Rückführungsleitung 27 ist dagegen der zweiten Kammer 20 strömungstechnisch zugeordnet. Bei einer Bewegung des Kolbens 16 in die erste Richtung (Pfeil 23) kann Kraftstoff aus der ersten Kammer 19 durch die Rückführungsleitung 6 und bei einer Bewegung in die zweite Richtung (Pfeil 26) aus der zweiten Kammer 20 durch die Rückführungsleitung 27 gefördert werden.

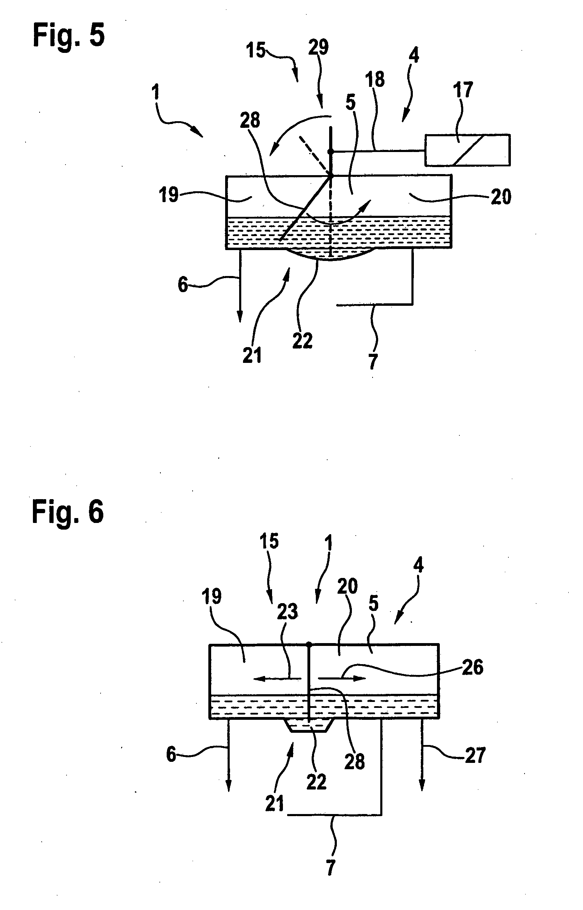

Die Figur 5 zeigt eine fünfte Ausführungsform des Kraftstoffsystems 1, wobei lediglich ein Ausschnitt dargestellt ist. Grundsätzlich ist das hier dargestellte Kraftstoffsystem 1 beziehungsweise die Abscheidevorrichtung 4 entsprechend den vorstehenden Ausführungen aufgebaut, so dass insoweit auf diese verwiesen sei. Anstelle des Kolbens 16 weist hier jedoch die Kraftstofffördereinrichtung 15 eine Klappe 28 auf. Diese ist über die Kuppelstange 18 und/oder ein Gelenksystem 29 mit der Betätigungseinrichtung 17 beziehungsweise der gemeinsamen Betätigungseinrichtung 24 (nicht dargestellt) wirkverbünden. Die Klappe 28 ist in dem Zwischenspeicher 5 vorgesehen und teilt diesen, ebenso wie der Kolben 16, in die erste Kammer 19 und die zweite Kammer 20 auf. Sie ist schwenkbar gelagert, wobei bei Betätigung der Klappe 28 mittels der Betätigungseinrichtung 17 oder 24 die Schwenkbewegung durchgeführt wird. Die Schwenkbewegung bewirkt dabei entsprechend der Bewegung des Kolbens 16 die Förderwirkung der Kraftstofffördereinrichtung 15.

Die Figur 6 zeigt eine sechste Ausführungsform des Kraftstoffsystems 1, wobei wiederum lediglich ein Bereich wiedergegeben ist. Zu Aufbau des Kraftstoffsystems 1 sei wiederum auf die vorstehenden Ausführungen verwiesen. Die Klappe 28 ist hier für eine Betätigung durch Inertialbewegung ausgebildet. Das bedeutet, dass sie derart schwenkbeweglich in dem Zwischenspeicher 5 angeordnet ist, dass bei einer Bewegung des Kraftstoffsystems 1 beziehungsweise des Kraftfahrzeugs eine Bewegung der Klappe 28 in die erste oder die zweite Richtung (Pfeile 23 und 26) bewirkt wird. In der in der Figur 6 dargestellten Ausführungsform sind sowohl die Rückführungsleitung 6 als auch die Rückführungsleitung 27 vorgesehen. Alternativ kann auch lediglich eine der Rückführungsleitungen 6 und 27 vorliegen, also eine Förderwirkung der Klappe 28 nur in eine Richtung vorgesehen sein.

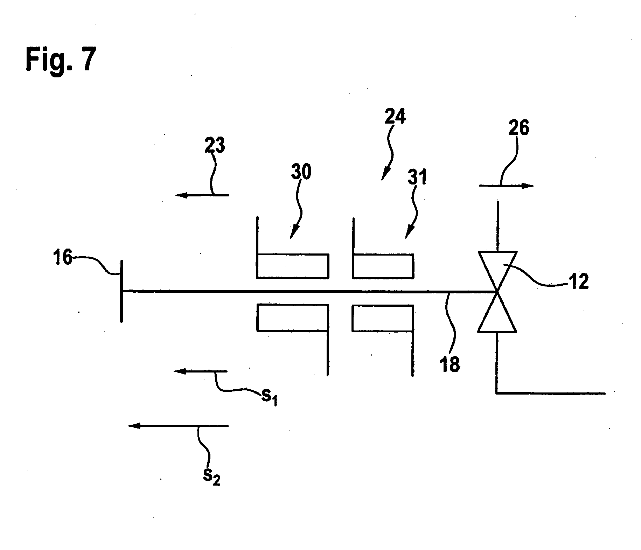

Die Figur 7 zeigt eine erste Ausführungsform der gemeinsamen Betätigungseinrichtung 24. Neben der Betätigungseinrichtung 24 sind auch der Kolben 16 und das Entlüftungsventil 12 dargestellt. Die Betätigungseinrichtung 24 weist zwei Elektromagnete beziehungsweise Elektromagnetsysteme 30 und 31 auf. Die Betätigungseinrichtung 24 ist nun entweder dazu ausgelegt, die Bewegung des Kolbens 16 oder der Klappe 28 in die erste Richtung (Pfeil 23) beziehungsweise die zweite Richtung (Pfeil 26) oder um einen ersten Hub (s₁) beziehungsweise einen zweiten, größeren Hub (s₂) durchzuführen. Dabei sind der Kolben 16 und das Entlüftungsventil 12 derart über die Kuppelstange 18 mit der Betätigungseinrichtung 24 wirkverbunden, dass bei Durchführung der Bewegung in die erste Richtung oder um den ersten Hub nur die Kraftstofffördereinrichtung 15, also der Kolben 16 beziehungsweise die Klappe 28, nicht jedoch das Entlüftungsventil 12 und bei Durchführung der Bewegung in die zweite Richtung oder um den zweiten Hub nur das Entlüftungsventil 12, nicht jedoch die Kraftstofffördereinrichtung 15 betätigt wird.

Beispielsweise kann bei einer Bestromung nur des Elektromagnets 30 die Bewegung in die erste Richtung oder um den ersten Hub vorliegen und bei einer Bestromung nur des Elektromagnets 31 die Bewegung in die zweite Richtung oder um den zweiten Hub. Alternativ kann die Betätigungsbewegung um den zweiten Hub auch durch eine Bestromung sowohl des Elektromagnets 30 als auch des Elektromagnets 31 bewirkt werden, wobei gleiche oder unterschiedliche Spannungen (beispielsweise 5V und 12V) verwendet werden können.

Weiterhin kann es vorgesehen sein, dass die Abscheidevorrichtung 4 eine hier nicht dargestellte Füllstandsbestimmungseinrichtung zur Bestimmung des Füllstands in dem Zwischenspeicher 5 aufweist. Dabei kann es vorgesehen sein, dass das Entlüftungsventil 12 und/oder das Kraftstofffördermittel 15 in Abhängigkeit von dem Füllstand des Zwischenspeichers 5 gesteuert und/oder geregelt betrieben werden. Insbesondere soll die Kraftstofffördereinrichtung 15 nur betrieben werden, wenn der Füllstand des Zwischenspeichers 5 größer oder gleich einem bestimmten Füllstand, insbesondere Maximalfüllstand ist.

## Patentansprüche

1. Kraftstoffsystem (1), insbesondere eines Kraftfahrzeugs, mit einem Kraftstofftank (2) und einer Entlüftungseinrichtung (3) zur Entlüftung des Kraftstofftanks (2), wobei die Entlüftungseinrichtung (3) über zumindest eine einen Zwischenspeicher (5) für flüssigen Kraftstoff aufweisende Abscheidevorrichtung (4) verfügt, wobei die Abscheidevorrichtung (4) eine Kraftstofffördereinrichtung (15) zur Förderung von Kraftstoff aus dem Zwischenspeicher (5) aufweist, **dadurch gekennzeichnet, dass** die Kraftstofffördereinrichtung (15) in die Abscheidevorrichtung (4) integriert ist und mindestens einen zumindest bereichsweise in dem Zwischenspeicher (5) angeordneten Kolben (16), insbesondere einen Einzelkolben oder einen Doppelkolben, und/oder eine schwenkbar gelagerte Klappe (28) aufweist, wobei der Kolben (16) oder die Klappe (28) den Zwischenspeicher (5) zumindest in eine erste (19) und eine zweite Kammer (20) aufteilt, wobei Mittel (21) vorgesehen sind, über welche in zumindest einer Stellung des Kolbens (16) oder der Klappe (28) die Kammern (19,20) in Strömungsverbindung stehen, und wobei in zumindest einer weiteren Stellung des Kolbens (16) oder der Klappe (28) die Strömungsverbindung unterbrochen ist.

2. Kraftstoffsystem nach Anspruch 1, **dadurch gekennzeichnet, dass** die Mittel (21) einen Überströmkanal (22) und/oder ein, insbesondere den Kolben (16) oder die Klappe (28) durchgreifendes, Durchlassventil (35) aufweisen.

3. Kraftstoffsystem nach einem der vorhergehenden Ansprüche, **dadurch gekennzeichnet, dass** der Kraftstofffördereinrichtung (15) eine Betätigungseinrichtung (17,24), insbesondere mindestens einen Elektromagnet (30,31) aufweisend, zugeordnet ist.

4. Kraftstoffsystem nach einem der vorhergehenden Ansprüche, **gekennzeichnet durch** mindestens ein der Abscheidevorrichtung (4) strömungstechnisch vorgeschaltetes oder nachgeschaltetes Entlüftungsventil (12) zur Entlüftung des Kraftstofftanks (2) **durch** die Abscheidevorrichtung (4).

5. Kraftstoffsystem nach einem der vorhergehenden Ansprüche, **dadurch gekennzeichnet, dass** sowohl die Kraftstofffördereinrichtung (15) als auch das Entlüftungsventil (12) von der Betätigungseinrichtung (24) betätigbar sind, insbesondere getrennt voneinander oder gemeinsam.

6. Kraftstoffsystem nach einem der vorhergehenden Ansprüche, **dadurch gekennzeichnet, dass** die Betätigungseinrichtung (24) zur Durchführung einer Betätigungsbewegung in eine erste Richtung und eine der ersten Richtung entgegengesetzte zweite Richtung oder um einen ersten Hub und um einen zweiten, größeren Hub ansteuerbar ist, wobei die Durchführung der Betätigungsbewegung in die erste Richtung oder um den ersten Hub die Kraftstofffördereinrichtung (15) und die Durchführung der Betätigungsbewegung in die zweite Richtung oder um den zweiten Hub das Entlüftungsventil (12) betätigen.

7. Kraftstoffsystem nach einem der vorhergehenden Ansprüche, **dadurch gekennzeichnet, dass** die Klappe (28) für eine Betätigung durch Inertialbewegung ausgebildet ist.

8. Kraftstoffsystem nach einem der vorhergehenden Ansprüche, **dadurch gekennzeichnet, dass** die Abscheidevorrichtung (4) zumindest ein in Abhängigkeit des Kraftstofftankfüllstands schaltendes Belüftungsventil (8) und/oder zumindest ein dem Kraftstofftank (2) zugeordnetes Sicherheitsventil strömungstechnisch vorgeschaltet sind.

## Claims

1. Fuel system (1), in particular in a motor vehicle, comprising a fuel tank (2) and a ventilation device (3) for ventilating the fuel tank (2), the ventilation device (3) comprising at least one separation apparatus (4) comprising a temporary reservoir (5) for liquid fuel, the separation apparatus (4) having a fuel conveying device (15) for conveying fuel from the temporary reservoir (5), **characterised in that** the fuel conveying device (15) is integrated in the separation apparatus (4) and comprises at least one piston (16), in particular a single piston or a double piston, arranged at least in regions in the temporary reservoir (5), and/or a pivotally mounted flap (28), the piston (16) or the flap (28) dividing the temporary reservoir (5) at least into a first (19) and a second chamber (20), means (21) being provided which connect the chambers (19, 20) in terms of flow in at least one position of the piston (16) or of the flap (28), and the flow connection being interrupted in at least one additional position of the piston (16) or of the flap (28).

2. Fuel system according to claim 1, **characterised in that** the means (21) include an overflow channel (22) and/or an outlet valve (35) which in particular engages through the piston (16) or the flap (28).

3. Fuel system according to any of the preceding claims, **characterised in that** an actuation device (17, 24), in particular having at least one electromagnet (30, 31), is assigned to the fuel conveying device (15).

4. Fuel system according to any of the preceding claims, **characterised by** at least one ventilation valve (12) which is intended for ventilating the fuel tank (2) via the separation device (4) and is arranged upstream or downstream of the separation device (4) in terms of flow.

5. Fuel system according to any of the preceding claims, **characterised in that** both the fuel conveying device (15) and the ventilation valve (12) can be actuated by the actuation device (24), in particular separately or together.

6. Fuel system according to any of the preceding claims, **characterised in that** the actuation device (24) can be controlled in order to carry out an actuation movement in a first direction and a second direction which is opposite to the first direction or by a first lift and a second, greater lift, the implementation of the actuation movement in the first direction or by the first lift actuating the fuel conveying device (15) and the implementation of the operating movement in the second direction or by the second lift actuating the ventilation valve (12).

7. Fuel system according to any of the preceding claims, **characterised in that** the flap (28) is designed to be actuated by inertial motion.

8. Fuel system according to any of the preceding claims, **characterised in that** at least one ventilation valve (8), which switches depending on the fuel tank fill level, and/or at least one safety valve assigned to the fuel tank (2) are arranged upstream of the separation apparatus (4) in terms of flow.

## Revendications

1. Système d'alimentation en carburant (1), notamment d'un véhicule automobile, avec un réservoir de carburant (2) et avec un dispositif de dégazage (3) pour dégazer le réservoir de carburant (2), le dispositif de dégazage (3) disposant d'au moins un dispositif de séparation (4) qui comporte un réservoir tampon (5) pour du carburant liquide, le dispositif de séparation (4) comportant un dispositif de transport de carburant (15) pour transporter du carburant hors du réservoir tampon (5), **caractérisé en ce que** le dispositif de transport de carburant (15) est intégré dans le dispositif de séparation (4) et comporte au moins un piston (16), notamment un piston simple ou un piston double, agencé au moins partiellement dans le réservoir tampon (5) et/ou un clapet (28) logé de manière à pouvoir pivoter, le piston (16) ou le clapet (28) divisant le réservoir tampon (5) en au moins une première chambre (19) et une deuxième chambre (20), des moyens (21) étant prévus par l'intermédiaire desquels les chambres (19, 20) sont en liaison de flux.pour au moins une position du piston (16) ou du clapet (28) et la liaison de flux est interrompue pour au moins une autre position du piston (16) ou du clapet (28).

2. Système d'alimentation en carburant selon la revendication 1, **caractérisé en ce que** les moyens (21) comportent un canal de transfert (22) et/ou une soupape d'admission (35) traversant le piston (16) ou le clapet (28).

3. Système d'alimentation en carburant selon l'une des revendications précédentes, **caractérisé en ce qu'**un dispositif d'actionnement (17, 24), comportant notamment au moins un électroaimant (30, 31), est associé au dispositif de transport de carburant (15).

4. Système d'alimentation en carburant selon l'une des revendications précédentes, **caractérisé par** au moins une soupape de dégazage (12) branchée en amont ou en aval, du point de vue de la technique des fluides, du dispositif de séparation (4) en vue du dégazage du réservoir de carburant (2) via le dispositif de séparation (4).

5. Système d'alimentation en carburant selon l'une des revendications précédentes, **caractérisé en ce qu'**aussi bien le dispositif de transport de carburant (15) que la soupape de dégazage (12) peuvent être actionnés par le dispositif d'actionnement (24), notamment séparément l'un de l'autre ou conjointement.

6. Système d'alimentation en carburant selon l'une des revendications précédentes, **caractérisé en ce que** le dispositif d'actionnement (24) peut être commandé pour la mise en oeuvre d'un mouvement d'actionnement dans une première direction et dans une deuxième direction opposée à la première direction ou suivant une première course et suivant une deuxième course plus grande, la mise en oeuvre du mouvement d'actionnement dans la première direction ou suivant la première course actionnant alors le dispositif de transport de carburant (15) et la mise en oeuvre du mouvement d'actionnement dans la deuxième direction ou suivant la deuxième course actionnant alors la soupape de dégazage (12).

7. Système d'alimentation en carburant selon l'une des revendications précédentes, **caractérisé en ce que** le clapet (28) est conçu pour un actionnement par mouvement inertiel.

8. Système d'alimentation en carburant selon l'une des revendications précédentes, **caractérisé en ce qu'**au moins une soupape d'aération (8) commutant en fonction du niveau de remplissage du réservoir de carburant et/ou au moins une soupape de sécurité associée au réservoir de carburant (2) sont branchées en amont, du point de vue de la technique des fluides, du dispositif de séparation (4).
